# EUROPÄISCHE PATENTANMELDUNG

(11) **EP 2 249 219 A2**
(43) Veröffentlichungstag der Anmeldung: **10.11.2010**
(21) Anmeldenummer: 10152864.4
(22) Anmeldetag: 08.02.2010
(51) Int. Cl.: G05B 19/05

(54) **Verfahren zur Auswahl eines einem Übertragungsnetz eines Automatisierungs-Systems zugeordneten Kommunikationssystems**

(30) Priorität: 06.03.2009 DE 102009012164
(71) Anmelder: SIEMENS AKTIENGESELLSCHAFT, 80333 München (DE)
(72) Erfinder: Eichner, Ingo, 91413, Neustadt/Aisch (DE); Munoz Ibarra, Pablo, 91058, Erlangen (DE); Wedel, Friedrich, 8405 Winterthur (CH)

(57) **Zusammenfassung**

Die vorliegende Erfindung betrifft ein Verfahren zur Auswahl eines einem Übertragungsnetz (100, 300, 400, 500, 600) eines Automatisierungs-Systems zugeordneten Kommunikationssystems (120, 130, 140), wobei
e) ein Übertragungsnetz (100, 300, 400, 500, 600) mit mehreren an das Übertragungsnetz (100, 300, 400, 500, 600) angeschlossenen Teilnehmern (101 - 115) eines oder mehrerer Automatisierungs-Systeme auf einer Anzeigeeinheit (10) dargestellt oder darstellbar ist,
f) dem Übertragungsnetz (100, 300, 400, 500, 600) mindestens zwei Kommunikationssysteme (120, 130, 140) zugeordnet sind, wobei die mindestens zwei Kommunikationssysteme (120, 130, 140) jeweils zur Kommunikation zwischen mindestens zwei der an das Übertragungsnetz (100, 300, 400, 500, 600) angeschlossenen Teilnehmer (101 - 115) über das Übertragungsnetz (100, 300, 400, 500, 600) ausgebildet und eingerichtet sind,
g) durch Auswahl eines dem Übertragungsnetz auf der Anzeigeeinheit zugeordneten Auswahlbereichs (100, 300, 400, 500, 600) mittels eines Auswahlmittels (200) die dem Übertragungsnetz (100, 300, 400, 500, 600) zugeordneten Kommunikationssysteme (120, 130, 140) dargestellt werden, insbesondere auf der Anzeigeeinheit (10) dargestellt werden,

und nach Verfahrensschritt c) eines der dargestellten Kommunikationssysteme (120, 130, 140) auswählbar ist, insbesondere mittels des Auswahlmittels (200) auswählbar ist.

## Beschreibung

Die vorliegende Erfindung betrifft ein Verfahren zur Auswahl eines einem Übertragungsnetz eines Automatisierungs-Systems zugeordneten Kommunikationssystems, wobei
- ein Übertragungsnetz mit mehreren an das Übertragungsnetz angeschlossenen Teilnehmern eines oder mehrerer Automatisierungs-Systeme auf einer Anzeigeeinheit dargestellt oder darstellbar ist und
- dem Übertragungsnetz mindestens zwei Kommunikationssysteme zugeordnet sind,
- wobei die mindestens zwei Kommunikationssysteme jeweils zur Kommunikation zwischen mindestens zwei der an das Übertragungsnetz angeschlossenen Teilnehmer über das Übertragungsnetz ausgebildet und eingerichtet sind.

Derartige Verfahren sind aus dem Stand der Technik bekannt. So wird beispielsweise in dem Buch "AUTOMATING WITH SIMATIC" (Automating with Simatic, Autor: Hans Berger, 3rd Revised Edition, 2006, Publicis Corporate Publition) beispielsweise in Kapitel 6, Unterkapitel 6.5, ein Profibus-Übertragungsnetz mit mehreren Teilnehmern offenbart. Dabei können einzelne der Teilnehmer als dezentrale Peripherie mit einer Zentraleinheit zu einem Kommunikationssystem verschaltet werden. Nach der Auswahl der Zentraleinheit auf einem Bildschirm lassen sich dann in einem Programmiersystem Eigenschaftswerte dieses dezentralen Peripheriesystems eingeben und verändern.

Es ist ein Nachteil des genannten Standes der Technik, dass bei der Bearbeitung solcher Kommunikationssysteme der Anwender genaue Informationen über die Bedeutung der einzelnen Teilnehmer haben muss, um ein entsprechendes System zu parametrieren.

Daher ist es eine Aufgabe der vorliegenden Erfindung, ein Verfahren zur Bearbeitung von einem Übertragungsnetz zugeordneten Kommunikationssystemen zur Verfügung zu stellen, welches eine einfachere Identifikation und ggf. nachfolgende Bearbeitung einzelner Kommunikationssysteme ermöglicht.

Diese Aufgabe wird gelöst von einem Verfahren zur Auswahl eines einem Übertragungsnetz eines Automatisierungssystems zugeordneten Kommunikationssystems, wobei
- ein Übertragungsnetz mit mehreren an das Übertragungsnetz angeschlossenen Teilnehmern eines oder mehrerer Automatisierungs-Systeme auf einer Anzeigeeinheit dargestellt ist,
- dem Übertragungsnetz mindestens zwei Kommunikationssysteme zugeordnet sind, wobei
- die mindestens zwei Kommunikationssysteme jeweils zur Kommunikation zwischen mindestens zwei der an das Übertragungsnetz angeschlossenen Teilnehmer über das Übertragungsnetz ausgebildet und eingerichtet sind,
- mittels eines Auswahlmittels durch Auswahl eines dem Übertragungsnetz auf der Anzeigeeinheit zugeordneten Auswahlbereichs, die dem dargestellten Übertragungsnetz zugeordneten Kommunikationssysteme dargestellt werden, insbesondere auf der Anzeigeeinheit dargestellt werden, und
- nach dem vorstehenden Auswahl-Verfahrensschritt eines der dargestellten Kommunikationssysteme auswählbar ist, insbesondere mittels des Auswahlmittels auswählbar ist.

Die genannte Aufgabe wird auch gelöst von einem Verfahren zur Auswahl eines einem Übertragungsnetz eines Automatisierungs-systems zugeordneten Kommunikationssystems, wobei ein Übertragungsnetz mit mehreren an das Übertragungsnetz angeschlossenen Teilnehmern eines oder mehrerer Automatisierungs-Systeme auf einer Anzeigeeinheit dargestellt ist, dem Übertragungsnetz mindestens zwei Kommunikationssysteme zugeordnet sind, wobei die mindestens zwei Kommunikationssysteme jeweils zur Kommunikation zwischen mindestens zwei der an das Übertragungsnetz angeschlossenen Teilnehmer über das Übertragungsnetz ausgebildet und eingerichtet sind mittels eines Auswahlmittels durch Auswahl eines einem Teil des dargestellten Übertragungsnetzes zugeordneten Auswahlbereiches alle dem Teil des Übertragungsnetzes zugeordneten Kommunikationssysteme dargestellt werden, insbesondere auf der Anzeigeeinheit dargestellt werden, und nach dem vorausgehenden Auswahl-Verfahrensschritt eines der dargestellten Kommunikationssysteme auswählbar ist, insbesondere mittels der Auswahl-Mittel auswählbar ist.

Dadurch, dass der Auswahlvorgang für ein bestimmtes Kommunikationssystem die grafische Darstellung des Übertragungsnetzes selbst als Ausgangspunkt hat, ist es nicht mehr notwendig, bereits vor der Auswahl die genaue Topologie, Anordnung und/oder bestimmte Teile des Kommunikationssysteme (z. B. die Zentraleinheit) zu kennen und/oder zu identifizieren. Weiterhin wird die Auswahl durch die Darstellung der dem Übertragungsnetz zugeordneten Kommunikationssysteme vereinfacht, da beispielsweise auch hier keine Vorinformationen über diese Kommunikationssysteme notwendig sind.

Ein Automatisierungs-System kann beispielsweise jegliche Art von elektronischen und/oder elektromechanischen Systemen sein, die zur Steuerung und/oder Regelung eines technischen Systems geeignet und/oder ausgebildet sind. Dies können beispielsweise Systeme zur Steuerung, Regelung und/oder Automatisierung von Maschinen, Geräten, Produktionsanlagen oder sonstigen technischen Einrichtungen sein.

Ein Übertragungsnetz kann beispielsweise ein als Telekommunikationsnetz, Internet oder ein ähnliches Netzwerk, Ethernet, Industrial Ethernet (IEEE 802.3 und/oder 802.3u), PROFINET, ein auf Automatisierungs-Anwendungen angepasstes Industrial Ethernet, PROFIBUS (IEC 61158/EN50170), AS-Interface, KNX (EN50090, ANSI EIA 776), MPI (Multipoint Interface) oder ähnliches Netz ausgebildet sein. Weiterhin kann ein Übertragungsnetz auch als ein entsprechendes Drahtlos-Netzwerk wie beispielsweise ein WLAN, "Industrial WLAN" oder ein Mobilfunknetz sein.

Unter einem Kommunikationssystem im Sinne der vorliegenden Erfindung wird ein System betrachtet, welches mindestens zwei über das Übertragungsnetz kommunizierende Teilnehmer umfasst. Die Kommunikation kann dabei beispielsweise temporär, für eine längere Zeit oder auch dauerhaft aufgebaut sein. Ein Kommunikationssystem kann beispielsweise als ein Automatisierungssystem mit dezentraler Peripherie ausgebildet sein. Ein solches kann z.B. eine Zentraleinheit sowie z.B. eine oder mehrere dezentral angeordnete Feldgeräte und/oder dezentral angeordnete Module für Feldgeräte und/oder Peripheriesysteme umfassen, wobei die Zentraleinheit und die dezentrale Peripherie zumindest teilweise oder auch komplett durch das Übertragungsnetz verbunden sind. Bezüglich der dezentralen Peripherie können mit dem Übertragungsnetz beispielsweise ein oder mehrere der dezentralen Peripherie zugeordnete Interfacemodule verbunden sein. Ein solches Kommunikationssystem kann beispielsweise ein dezentrales Peripherie-System gemäß dem PROFINET IO oder dem PROFIBUS DP-Standard sein.

Die Anzeigeeinheit kann beispielsweise als Bildschirmeinheit, Display (z. B. ein LCD-Display) oder eine ähnliche Einheit zur grafischen Anzeige von Information sein. Als Anzeigeeinheit kann beispielsweise jegliche elektronische Einheit verwendet werden, die zur Anzeige grafischer Informationen geeignet und/oder ausgebildet ist.

Als Auswahlmittel kann beispielsweise jedes auf der Anzeigeeinheit dargestellte oder darstellbare Symbol oder grafische Zeichen oder auch jede Grafik verwendet werden, die relativ zu anderen auf dem Bildschirm dargestellten Zeichen oder Grafiken (z. B. einer grafischen Darstellung des Übertragungsnetzes oder Ähnlichem) bewegbar ist. Zu einer solchen Bewegung können beispielsweise Bedienmittel vorgesehen sein, mit welchen beispielsweise manuell die genannte relative Position des Auswahlmittels veränderbar ist. Weiterhin können auch zusätzliche Bedienmittel vorgesehen sein, mit welchen dann eine konkrete Auswahl mittels des Auswahlmittels erfolgen kann.

So kann beispielswiese das Auswahlmittel als "Mauszeiger" ausgebildet sein, der auf der Anzeigeeinheit dargestellt ist und über eine an die Anzeigeeinheit angeschlossene Maus, einen Joy-Stick oder auch eine oder mehrere Bedientasten relativ zur Anzeigeeinheit bewegt werden kann. Alternativ kann z. B. auch die Darstellung des Mauszeigers auf der Bildschirmoberfläche feststehen und mittels beispielsweise der genannten Bedienmittel oder auch anderer Bedienmittel eine bestimmte grafische Darstellung auf der Anzeigeeinheit relativ zum Mauszeiger bewegt werden. Zur Auswahl eines bestimmten Teiles einer Darstellung auf der Anzeigeeinheit, die mit dem Auswahlmittel ausgewählt werden soll, kann dann beispielsweise ein entsprechender Auswahlknopf, eine Taste oder eine Maustaste zu einer solchen Auswahl vorgesehen sein.

Der dem Übertragungsnetz zugeordnete Auswahlbereich kann beispielsweise der grafischen Darstellung des Übertragungsnetzes, z. B. inklusive der angeschlossenen Teilnehmer oder auch ohne die entsprechende Darstellung der angeschlossenen Teilnehmer verwendet werden. Es kann auch die grafische Darstellung des Übertragungsnetzes (z. B. einer entsprechenden Linienzeichnung) mit einem um die Darstellung herum vorgesehenen Toleranzbereich vorgesehen sein. Alternativ oder auch zusätzlich kann beispielsweise auch eine alphanumerische Darstellung des Übertragungsnetzes beispielsweise innerhalb eines Textfeldes oder einer Tabelle als Auswahlbereich verwendet werden.

Die Darstellung der dem Übertragungsnetz zugeordneten Kommunikationssysteme kann beispielweise auf der Anzeigeeinheit oder auch einer weiteren Anzeigeeinheit erfolgen. Die Darstellung kann beispielsweise symbolisch mittels alphanumerischer Zeichen und/oder auch grafisch mittels Symbolen und/oder entsprechenden Linien, Linienformen, Strichstärken oder Linienstrukturen (gestrichelt, strichpunktiert usw.) erfolgen.

Eine alphanumerische Darstellung kann beispielsweise im Rahmen einer auf der Anzeigeeinheit oder der weiteren Anzeigeeinheit dargestellten Liste oder Tabelle (z. B. als Spalte oder Zeile innerhalb einer solchen Tabelle oder Liste) erfolgen. Eine Tabelle kann beispielsweise noch weitere Spalten oder Zeilen aufweisen, die Zusatzinformationen enthalten können.

Weiterhin kann die genannte Darstellung der zugeordneten Kommunikationssysteme auf der Anzeigeeinheit auch grafisch dem Übertragungsnetz zugeordnet oder mit ihm verbunden sein, beispielsweise als eine Verbindungslinie oder ein Pfeil zwischen der Darstellung der Kommunikationssysteme und dem Übertragungsnetz.

Die Auswahl des Übertragungsnetzes kann beispielsweise über einen Bediener, z. B. über die vorstehend genannten Bedien-mittel erfolgen. Weiterhin kann die Auswahl des Übertragungsnetzes auch über ein Steuerungssystem, das beispielsweise von einem Programm gesteuert wird, erfolgen.

Wenn nach der Darstellung der dem Übertragungsnetz zugeordneten Kommunikationssysteme ein Kommunikationssystem ausgewählt wurde, kann nachfolgend das ausgewählte Kommunikationssystem grafisch auf der Anzeigeeinheit dargestellt werden. Dadurch wird die Struktur des Übertragungsnetzes noch einfacher erfassbar. Die Darstellung kann beispielsweise dadurch erfolgen, dass ein entsprechender, dem ausgewählten Kommunikationssystem zugeordneter Bereich des Übertragungsnetzes grafisch hervorgehoben oder markiert wird (z. B. durch eine veränderte Strichstärke und/oder Farbe und/oder Strichart oder Ähnliches). Weiterhin kann parallel oder alternativ auch das ausgewählte Kommunikationssystem innerhalb der Darstellung der dem Übertragungsnetz zugeordneten Kommunikationssysteme hervorgehoben werden (z. B. innerhalb inner auf der Anzeigeeinheit dargestellten Liste oder Tabelle), beispielsweise ebenfalls durch Farbgebung, Schrifttypus, Hintergrundfarbe und/oder eine entsprechende Markierung in der Listendarstellung, beispielsweise in einer anderen Spalte der Liste).

Nachdem ein Kommunikationssystem aus den dem Übertragungsnetz zugeordneten Kommunikationssystemen ausgewählt wurde, kann dem ausgewählten Kommunikationssystem eine Aktion zugewiesen werden oder zuweisbar sein. Mittels einer solchen Aktion ist eine weitere Bearbeitung von dem Kommunikationssystem zugeordneten Daten möglich. Dabei kann eine Aktion beispielsweise eine Änderung der grafischen Darstellung des Kommunikationssystems, eine Zuweisung von Teilnehmern, Netzen, Übertragungsprotokollen, Namen oder Ähnlichem und/oder auch eine Zuweisung oder Änderung von technische Parametern und Einstellungen des Kommunikationssystems bzw. einzelner Teilnehmer des Kommunikationssystems umfassen.

So kann eine Aktion beispielsweise das Verschieben eines Teilnehmers oder mehrerer Teilnehmer des Kommunikationssystems auf der Anzeigeeinheit umfassen beziehungsweise auch das Ermöglichen einer solchen Verschiebung. Weiterhin kann eine Aktion auch das Verschieben, Verändern, Kopieren oder Einfügen von Teilnehmern oder Teilen bzw. der ganzen Verbindungsstruktur des Kommunikationssystems umfassen. Auch das Kopieren, Einfügen oder Löschen mindestens eines Eigenschaftswerts mindestens eines Teilnehmers des Kommunikationssystems kann eine Aktion bzw. Bestandteil einer Aktion sein. Solche Eigenschaftswerte können beispielsweise die oben genannten Netzwerks- oder Übertragungsparameter bzw. Gerätenamen, Geräte-Eigenschaften usw. umfassen. Weiterhin kann eine Aktion auch das Zuweisen mindestens eine der oben genannten Eigenschaftswerte zu mindestens einem der Teilnehmer umfassen.

Dabei kann der mindestens eine Eigenschaftswert beispielsweise einer, mehrere oder alle Eigenschaftswerte sein, die den genannten Teilnehmern zugeordneten sind. Der mindestens eine Teilnehmer kann ebenfalls beispielsweise einer, mehrere oder alle Teilnehmer des ausgewählten Kommunikationssystems sein. Eigenschaftswerte können beispielsweise Kommunikationsparameter wie z. B. Übertragungsrate, Adressdaten, Schnittstellen-Informationen, angeschlossene Netzwerke und/Geräte, verwendetes Übertragungsprotokoll, Verbindungstyp oder Ähnliches oder auch Kommunikationssysteme-Parameter (wie z. B. der Namen bzw. ID-Kennzeichen innerhalb des Systems, angeschlossene Geräte, Netz-Namen, System-Namen, Verbindungswege, Informationen über Verbindungsauf- und Abbau, Netz-System-Manager-Informationen usw.) sein.

Weiterhin kann das Verfahren derart ausgestaltet sein, dass auch bei bereits ausgewähltem Kommunikationssystem auch dem Übertragungsnetz noch Aktionen gemäß der vorliegenden Beschreibung zuweisbar sind oder zugewiesen werden.

Die vorstehende Aufgabe wird auch gelöst von einer Bedieneinheit für ein Automatisierungssystem, umfassend:
- eine Anzeigeeinheit zur Darstellung eines Übertragungsnetzes mit mehreren an das Übertragungsnetz angeschlossenen Teilnehmern des Automatisierungs-Systems, wobei dem Übertragungsnetz mindestens zwei Kommunikationssysteme zugeordnet sind und die mindestens zwei Kommunikationssysteme jeweils zur Kommunikation zwischen mindestens zwei der an das Übertragungsnetz angeschlossenen Teilnehmer über das Übertragungsnetz ausgebildet und eingerichtet sind,
- Bedien-Mittel zur Steuerung eines auf der Anzeigeeinheit angezeigten oder angezeigten Auswahlmittels,
- eine Steuereinrichtung, die derart eingerichtet und ausgebildet ist, dass über eine Steuerung des Auswahlmittels durch die Bedien-Mittel durch Auswahl eines dem Übertragungsnetz auf der Anzeigeeinheit zugeordneten Auswahlbereichs alle dem Übertragungsnetz zugeordneten Kommunikationssysteme dargestellt werden, und
- dann eines der dargestellten Kommunikationssysteme unter Verwendung der Bedien-Mittel auswählbar ist, insbesondere mittels des Auswahlmittels auswählbar ist.

Dabei kann die Steuereinrichtung weiterhin zur Durchführung eines Verfahrens gemäß der vorliegenden Beschreibung eingerichtet und ausgebildet sein.

Auch eine derartige Bedieneinheit hat, wie das vorstehend beschriebene Verfahren, den Vorteil, dass die Auswahl eines einem Übertragungsnetz zugeordneten Kommunikationssystems vereinfacht wird, wobei es insbesondere ermöglicht wird, eine solche Auswahl vornehmen zu können, ohne über den Aufbau und/oder die Stuktur von Übertragungsnetz und/oder Kommunikationssystem bereits nähere Informationen zu haben.

Die Anzeigeeinheit, das Übertragungsnetz, die Teilnehmer, das Automatisierungs-System, die Anzeigeeinheit, die Bedien-Mittel, die Kommunikationssysteme, die Auswahlmittel, der Auswahlbereich sowie die anderen Merkmale der Bedieneinheit können weiterhin gemäß der vorliegenden Beschreibung ausgebildet sein.

Weitere bevorzugte Ausführungsformen finden sich in den Unteransprüchen.

Im Folgenden wird die Erfindung beispielhaft anhand der folgenden Figuren näher erläutert. Es zeigen:
- Figur 1:: Darstellung eines Automatisierungssystems auf einer Anzeigeeinheit;
- Figur 2:: Darstellung des in Figur 1 dargestellten Automatisierungssystems, wobei die zugeordneten Kommunikationssysteme zusätzlich angezeigt sind;
- Figur 3:: Das in Figur 2 dargestellte System nach der Auswahl eines Kommunikationssystems;
- Figur 4:: Darstellung des in Figur 3 dargestellten Systems nach der Auswahl eines anderen Kommunikationssystems;
- Figur 5:: Darstellung des in Figur 3 gezeigten Systems nach dem Ausblenden der Auswahlliste;
- Figur 6:: Darstellung des in Figur 5 gezeigten Systems nach der Selektion des angezeigten ausgewählten Kommunikationssystems;
- Figur 7:: Darstellung eines Automatisierungssystems gemäß Figur 1 mit zusätzlicher Erweiterung und einem hervorgehobenen, der Erweiterung zugeordneten dritten Kommunikationssystem;
- Figur 8:: Alternative Anzeigemethode des ersten Kommunikationssystems;
- Figur 9:: Darstellung des erweiterten Automatisierungssystems gemäß Figur 7 nach paralleler Anwahl zweier Kommunikationssysteme;
- Figur 10:: Darstellung eines alternativen Automatisierungssystems mit mehreren Übertragungsnetzen und zu einem Übertragungsnetz angezeigten Kommunikationssystem.

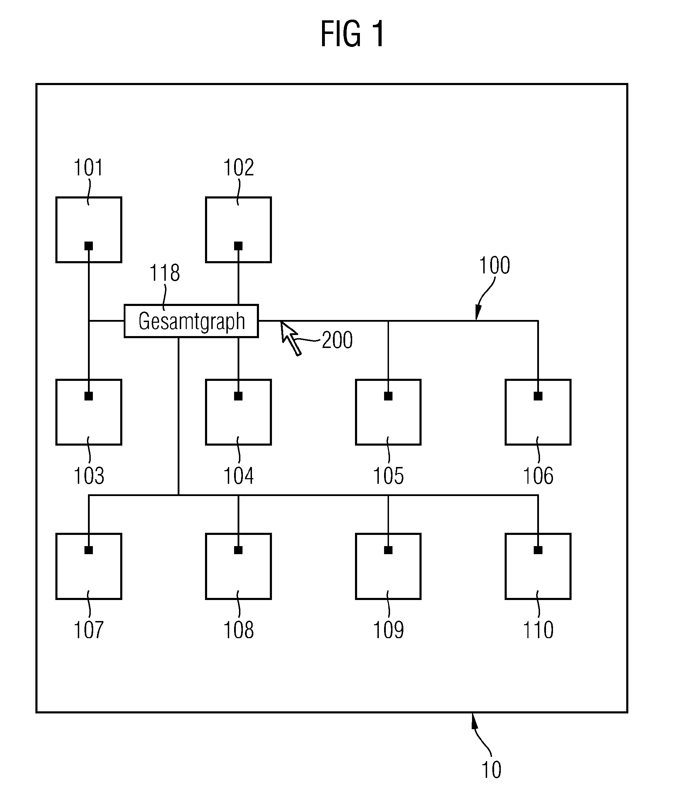

Figur 1 zeigt eine Anzeigeeinheit 10 mit einem auf der Anzeige 10 dargestellten Automatisierungssystem, welches ein Übertragungsnetz 100 und Teilnehmer 101 - 110 aufweist. Zusätzlich zur Darstellung des Übertragungsnetzes 100 ist in einem Textfeld 118 ein Name des Übertragungsnetzes 100 angezeigt. Weiterhin ist auf der Anzeigeeinheit ein Mauszeiger 200 dargestellt, welcher über eine an die Anzeigeeinheit 10 angeschlossene Computermaus von einem Bediener gesteuert werden kann. Der Mauszeiger ist hierbei ein Beispiel für ein Auswahlmittel gemäß der vorliegenden Beschreibung, während die Computermaus ein Beispiel für ein Bedienmittel gemäß der vorliegenden Beschreibung ist.

In der nachfolgenden Beschreibung wird das Übertragungsnetz 100 als Gesamtgraph 100 bezeichnet.

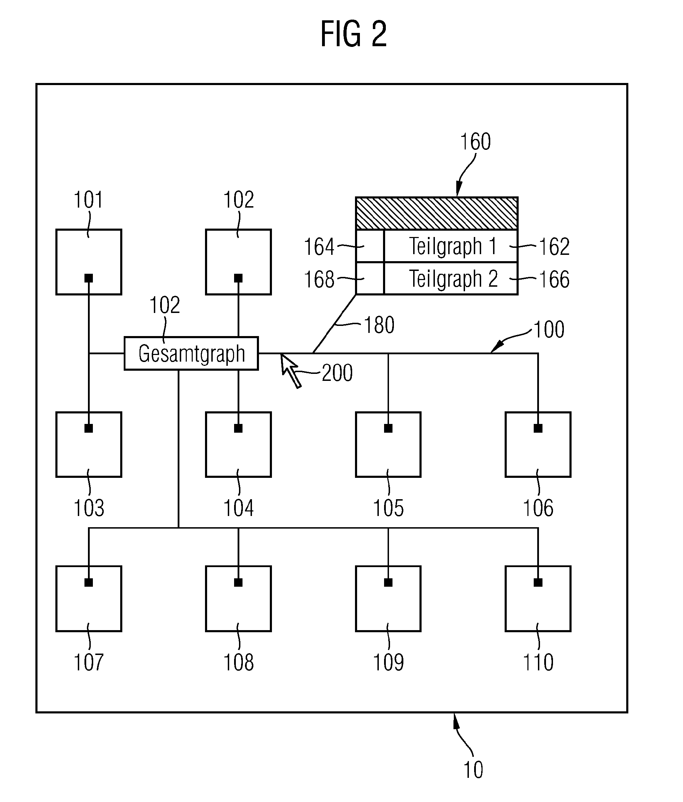

Figur 2 zeigt die in Figur 1 dargestellte Anzeigeeinheit 10 mit dem Übertragungsnetz 100 und den Teilnehmern 101 bis 110, nachdem der Mauszeiger 200 über die Liniendarstellung des Übertragungsnetzes 100 bewegt und diese dann per Mausklick angewählt wurde. Dieser Vorgang des Bewegens und Anklickens entspricht einem Beispiel für die Auswahl eines dem Übertragungsnetz 100 zugeordneten Auswahlbereichs durch die Auswahlmittel.

Nach dieser Auswahl wird auf den Bildschirm 10 eine Tabelle 160 angezeigt, die in einer zweiten, rechten Spalte, bestehend aus den Textfeldern 162 und 166, die die Namen der dem Übertragungsnetz 100 zugeordneten zwei Kommunikationssysteme enthalten. Diese zwei Kommunikationssysteme sind im vorliegenden Beispiel als Teilgraph 1 und Teilgraph 2 bezeichnet. Die Tabelle 160 enthält weiterhin in einer ersten, linken Spalte zwei Fixierungsfelder 164, 168, in welchem angezeigt werden kann, ob eines der Kommunikationssysteme auf der Anzeigeeinheit 10 dauerhaft angezeigt werden soll oder nicht. Dies wird anhand nachfolgender Figuren noch näher erläutert.

Weiterhin ist die Tabelle 160 über eine Verbindungslinie 180 mit der Darstellung des Übertragungsnetzes 100 verbunden, so dass für einen Benutzer deutlich wird, dass die Kommunikationssysteme Teilgraph 1 und Teilgraph 2, die in den Textfeldern 162 und 166 aufgeführt sind, dem Übertragungsnetz 100 zugeordnet sind.

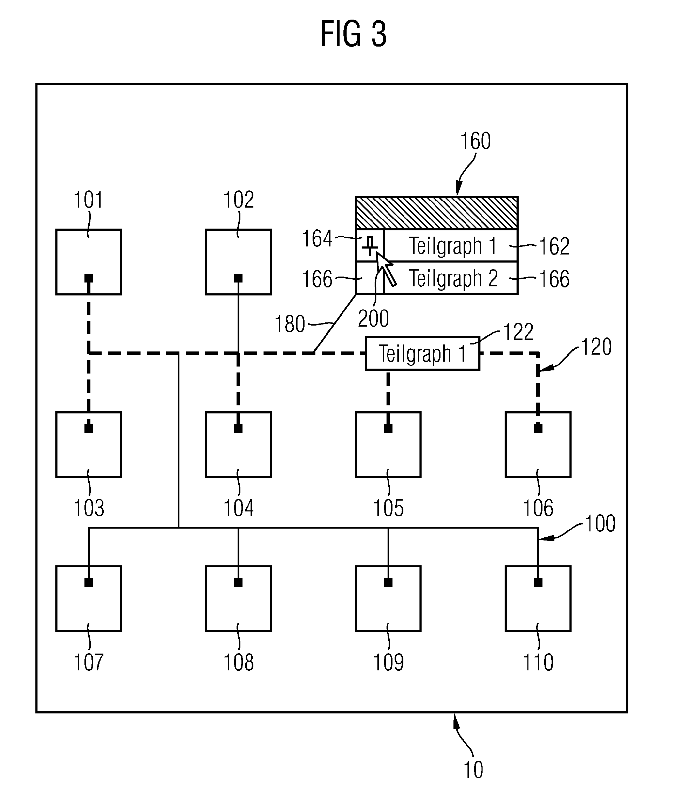

Figur 3 zeigt, dass in Figur 2 dargestellte System, nachdem mittels des Mauszeigers 200 das Kommunikationssysteme "Teilgraph 1" dadurch ausgewählt wurde, dass der Mauszeiger 200 über das entsprechende Feld 164 der Tabelle bewegt wurde und dann ein Benutzer per Mausklick dieses Feld und somit "Teilgraph 1" zur dauerhaften Anzeige ausgewählt wurde. Nach der Auswahl wird diese dauerhafte Anzeige durch die symbolische Darstellung einer Stecknadel im Feld 164 angezeigt. Parallel dazu wird weiterhin dem Textfeld 162 zum Teilgraph 1 eine graue Hintergrundfarbe zugeordnet, um die Auswahl zusätzlich anzudeuten. Zudem wird der Teil des Übertragungsnetzes 100, der vom Kommunikationssystem "Teilgraph 1" genutzt wird als gestrichelte Linie mit vergrößerter Strichstärke 120 auf der Anzeigeeinheit 10 dargestellt. Im vorliegenden Beispiel ist also ersichtlich, dass das Kommunikationssystem "Teilgraph 1" die Teilnehmer 101 und 103 - 106 umfasst, sowie die entsprechenden Teile des Übertragungsnetzes 100, die diese Teilnehmer verbinden.

Ein solches Kommunikationssystem kann beispielsweise als Steuereinheit 101 mit als dezentrale Peripherie ausgebildeten Feldgerätemodulen 103 bis 106 ausgebildet sein. In diesem Fall kann das Übertragungsnetz 100 beispielsweise als "Industrial Ethernet", PROFINET, PROFIBUS oder "Industrial WLAN" ausgebildet sein.

Zur weiteren Klarstellung der Darstellung auf der Anzeigeeinheit 10 ist im ausgewählten Übertragungsteil des Teilgraph 1 ein Textfeld 122 zugeordnet, auf welchem nochmals der Namen Teilgraph 1 dargestellt wird.

Die dauerhafte Auswahl der Anzeige von Teilgraph 1 durch Anklicken des vorderen Feldes 164 in der Tabelle 160 bewirkt, dass die angezeigten Merkmale, die dem ausgewählten Kommunikationssystem "Teilgraph 1" zugeordnet sind, auch auf der Anzeigeeinheit 10 dargestellt bleiben, wenn sich der Mauszeiger 200 wieder von der Tabelle 160 entfernt.

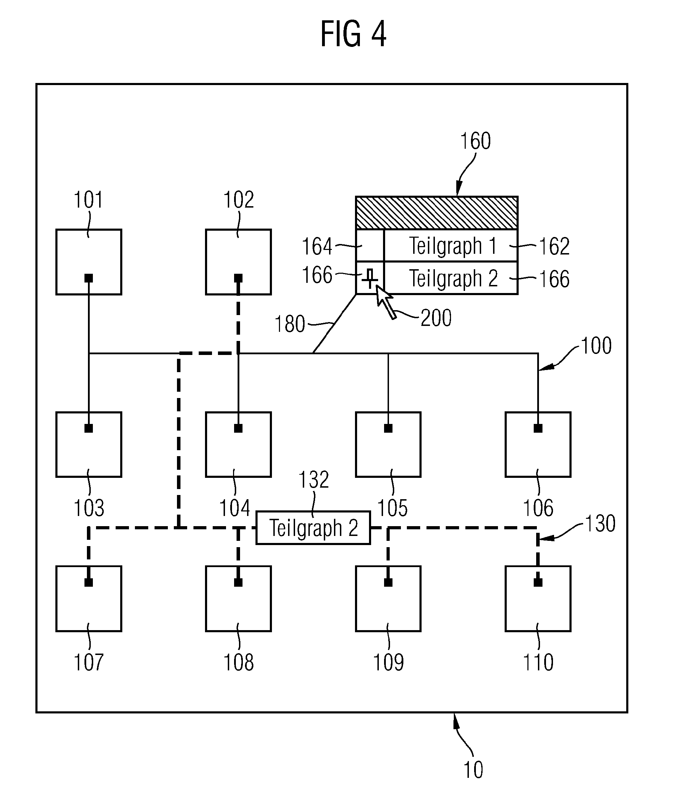

Figur 4 zeigt den in Figur 3 dargestellten Zustand, nachdem über den Mauszeiger 200 und einen zweiten Klick in die vordere Spalte der ersten Zeile der Tabelle 160 (Feld 164 in Figur 4) die Darstellung des Teilgraph 1 wieder abgewählt wurde. Danach ist kein Stecknadelsymbol in diesem Feld 164 mehr zu sehen, die Hinterlegung des entsprechenden Namensfeldes 162 mit der grauen Farbe ist verschwunden und die als gestrichelte dicke Linie dargestellten Teile des Übertragungsnetzes, die Teilgraph 1 zugeordnet sind, sind ebenfalls nicht mehr auf dem Bildschirm 10 zu sehen.

Weiterhin wurde in Figur 4 stattdessen durch Anklicken des vorderen Felds 166 der zweiten Zeile ein zweites Kommunikationssystem mit dem Namen Teilgraph 2 ausgewählt und auf dem Bildschirm fixiert. Dies ist wiederum durch Darstellung des stilisierten Stecknadel-Symbols im vorderen Feld 166 der zweiten Zeile symbolisiert. Weiterhin ist im entsprechenden Namensfeld 166 der Name Teilgraph 2 wieder grau unterlegt und der entsprechende Teil des Übertragungsnetzes 100, der dem Teilgraph 2 zugeordnet ist, mit einer dicken, gestrichelten Linie 130 auf dem Bildschirm 10 dargestellt. Diesem dem Teilgraph 2 zugeordneten Teil des Übertragungsnetzes 100 ist wieder ein entsprechendes Namensfeld 132 zugeordnet und auf dem Bildschirm dargestellt. So ist für einen Benutzer einfach erkennbar, dass der als dicke Linie gestrichelt gezeichnete Teil 130 des Übertragungsnetzes zum Kommunikationssystem "Teilgraph 2" gehört.

Dieses zweite Kommunikationssystem umfasst somit die Teilnehmer 102 sowie 107 bis 110. Ein solches Kommunikationssystem könnte z.B. wieder als dezentrales Steuerungssystem mit einer Zentraleinheit 102 sowie dezentralen Feldgerätemodulen 107 - 110 ausgestaltet sein.

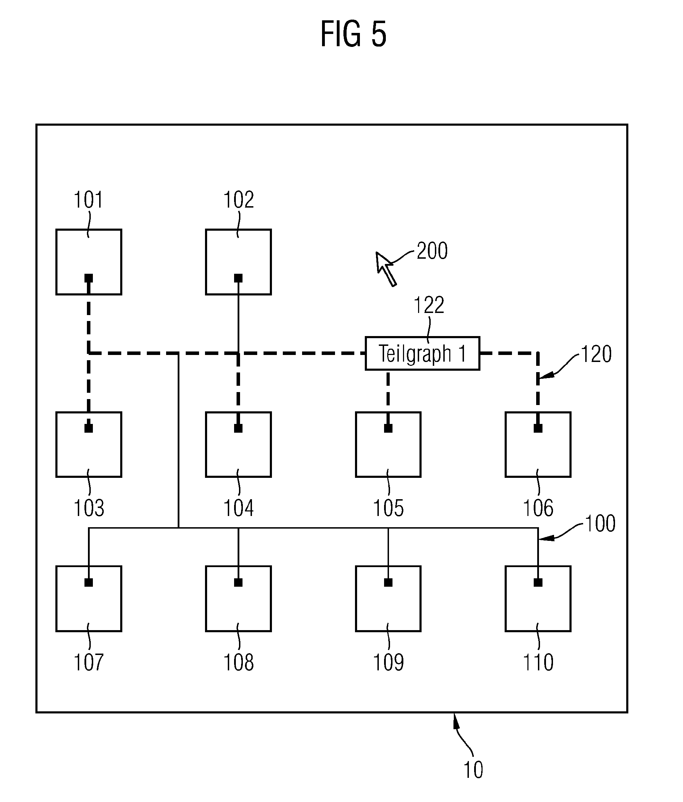

Figur 5 zeigt den in Figur 3 dargestellten Zustand des Systems, nachdem die Tabellendarstellung 160 der im Übertragungsnetz 100 vorliegenden Kommunikationssysteme abgewählt wurde. Diese Abwahl kann zum Beispiel erfolgen, indem ein Benutzer mit dem Mauszeiger auf einen nicht belegten Teil des Bildschirms 10 geht und diesen anwählt. Dann verschwindet die Tabellendarstellung 160, das dauerhaft ausgewählte Kommunikationssystem "Teilgraph 1" bleibt aber als Liniendarstellung 120 und Textblock 122 weiterhin auf der Anzeigeeinheit dargestellt.

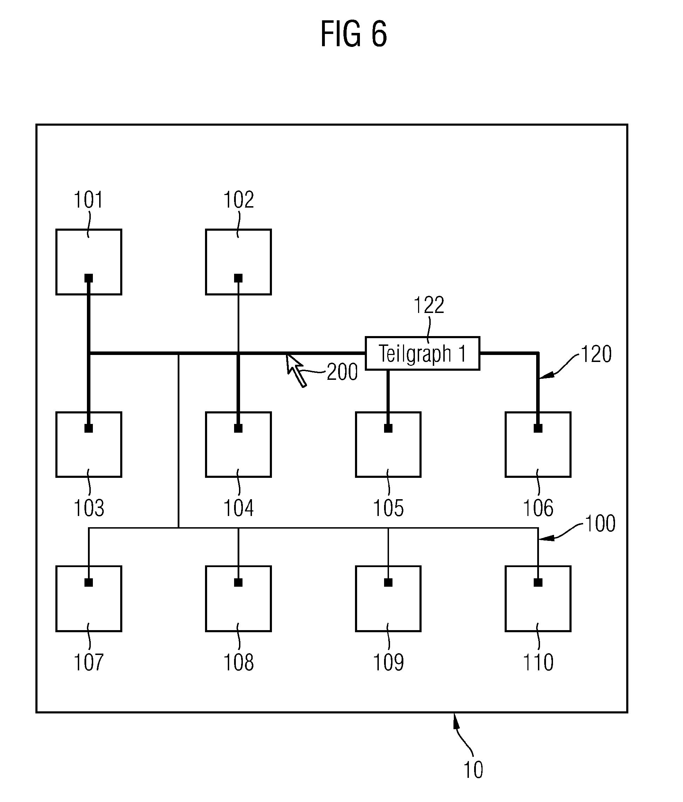

Figur 6 zeigt den Zustand aus Figur 5, nachdem die Darstellung 120 (dicke gestrichelte Linie) von "Teilgraph 1" mit dem Mauszeiger 200 ausgewählt wurde. Diese Auswahl wird dann in Figur 5 durch eine dicke durchgezogene Linie 120 symbolisiert. Nach einer solchen Auswahl kann ein Benutzer dem Kommunikationssystem dann Aktionen im Sinne der vorliegenden Beschreibung zuweisen. So können zum Beispiel durch entsprechende Eingaben (z.B. Tasteneingaben und/oder Mausklicks) Eingabemasken zur Eingabe von Übertragungsparametern, Teilnehmern und/oder Teilnehmerparametern geöffnet werden und entsprechende Parameter dann eingegeben, gelöscht oder geändert werden.

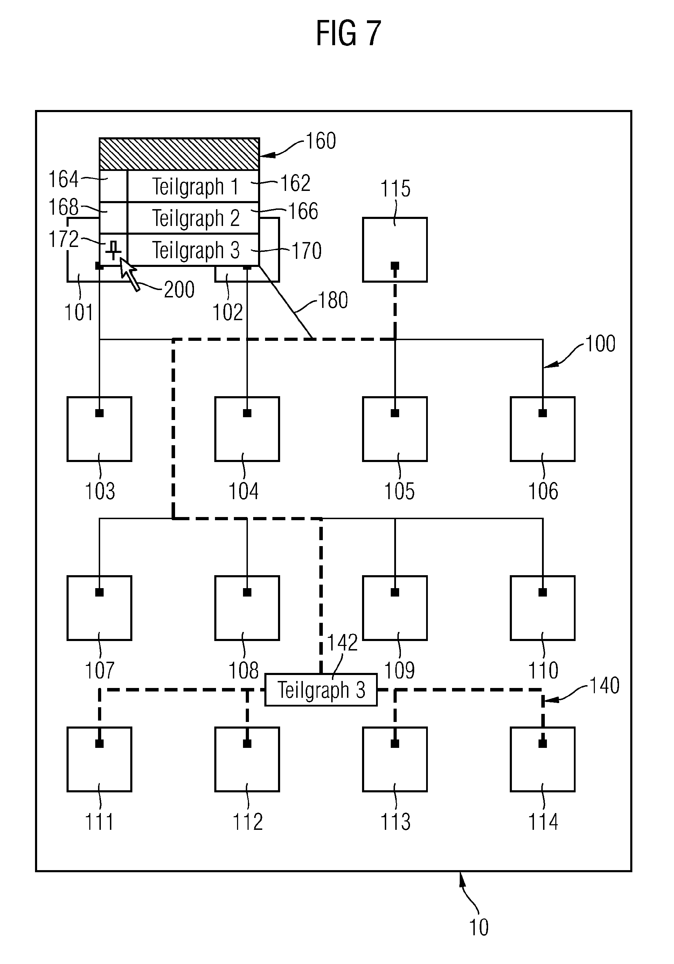

Figur 7 zeigt das in Figur 1 dargestellte System, nachdem das Übertragungsnetz 100 um fünf weitere Teilnehmer 111 - 115 und entsprechende Teile des Übertragungsnetzes 100 erweitert wurde.

Dem erweiterten Übertragungsnetz 100 ist ein drittes Kommunikationssystem "Teilgraph 3" zugeordnet. Analog der Beschreibung zu den Figuren 1 bis 6 wurde durch einen Mausklick auf die Darstellung 100 des Übertragungssystems die Tabelle 160 geöffnet, die nunmehr alle drei Kommunikationssysteme anzeigt. Nachfolgend wurde durch Anklicken der vorderen Spalte der dritten Zeile der Tabelle 160 (Textfeld 172) eine graphischen Darstellung 140 des "Teilgraph 3", ein Textfeld 142 mit dem Namen "Teilgraph 3" sowie eine graue Hinterlegung des entsprechenden Tabellenfelds 170 auf der Anzeige 10 dargestellt und fixiert.

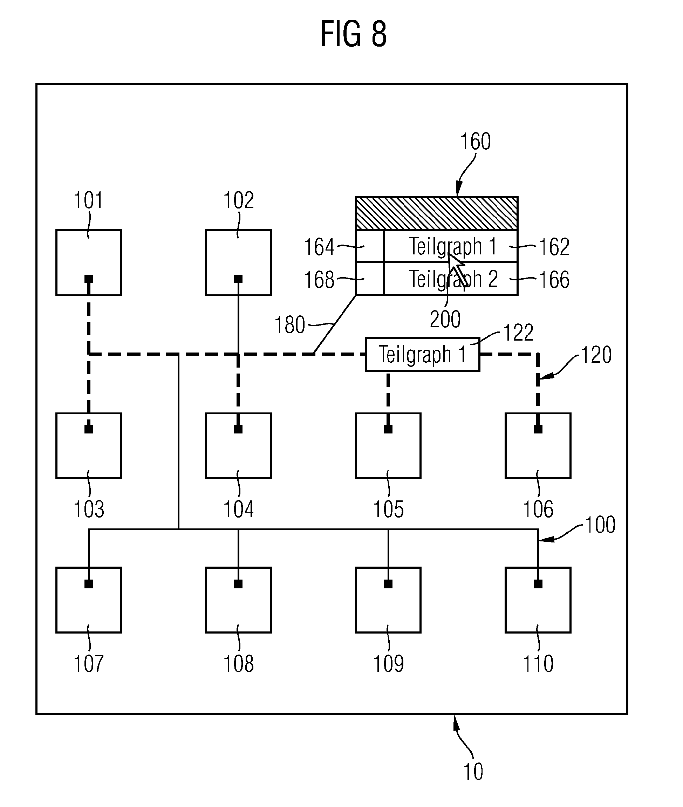

Figur 8 zeigt eine Auswahl des Teilgraph 1 im in Figur 1 dargestellten System, ohne dass diese Darstellung auf dem Bildschirm fixiert ist. Dies wurde erreicht, indem, anstatt das vordere Tabellenfeld 164 auszuwählen, der Mauszeiger 200 einfach über das zum Teilgraph 1 gehörende Namensfeld 162 der Tabelle 160 bewegt wurde, und die entsprechende Darstellung des Teilgraphen 1 als dicke gestrichelte Linie 120 sowie Textfeld 122 auf der Anzeigeeinheit 10 nur während der Zeit bestehen bleibt, während derer sich der Mauszeiger 200 über dem Textfeld 162 befindet. Sobald sich der Mauszeiger wieder von diesem Feld entfernt, verschwindet diese Darstellung wieder.

Entsprechend wird das Kommunikationssystem "Teilgraph 2" hervorgehoben, wenn sich der Mauszeiger 200 über den dem Teilgraph 2 zugeordneten Textfeld 166 befindet.

Es ist ein Vorteil dieser temporären Darstellung der Kommunikationssysteme, dass ein Benutzer sich auf diese Weise schnell einen Überblick über die vorhandenen Kommunikationssysteme, deren Aussehen und/oder deren Teilnehmer verschaffen kann.

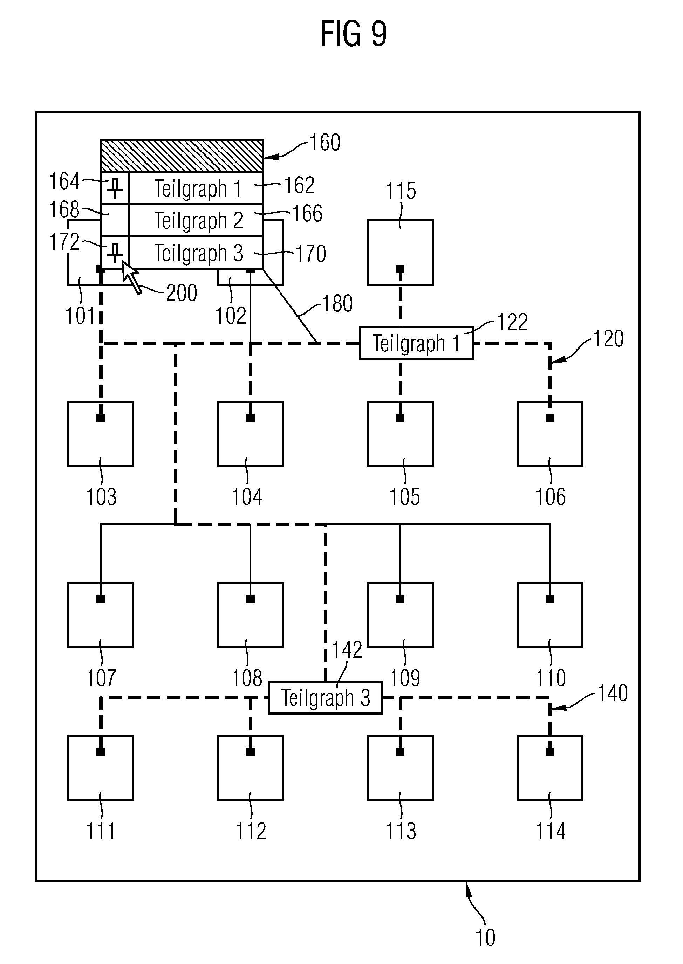

Figur 9 zeigt das in Figur 7 dargestellte erweiterte Übertragungsnetz 100, wobei durch entsprechend aufeinanderfolgendes Anklicken der Felder 164 und 172 die graphischen Darstellungen sowohl von Kommunikationssystem "Teilgraph 1" als auch Kommunikationssystem "Teilgraph 3", parallel angezeigt werden.

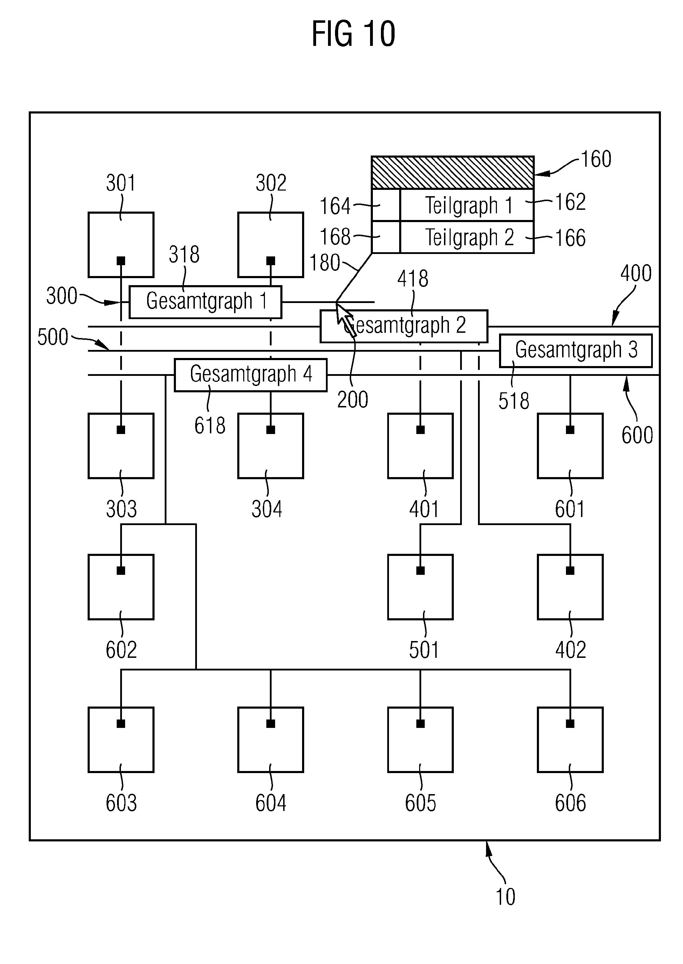

Figur 10 zeigt die Anzeigeeinheit 10 mit der Darstellung eines alternativen Automatisierungssystems mit einem ersten Übertragungsnetz 300 mit den Teilnehmern 301, 302, 303 und 304. Der Liniendarstellung 300 dieses Übertragungsnetzes ist ein Textfeld 318 zugeordnet, in dem dessen Name "Gesamtgraph 1" angezeigt ist.

Weiterhin umfasst das Automatisierungssystem ein zweites Übertragungsnetz 400, zu welchem in der Darstellung von Figur 10 auf der Anzeigeeinheit 10 die Teilnehmer 401 und 402 eingezeichnet sind. Auch dem zweiten Übertragungsnetz 400 ist ein Textfeld 418 zugeordnet, das dessen Namen "Gesamtgraph 2" beinhaltet.

Auf der Anzeigeeinheit ist noch ein drittes Übertragungsnetz 500 dargestellt, dem auf der Anzeigeeinheit 10 nur der Teilnehmer 501 zugeordnet ist. Der Name "Gesamtgraph 3" ist wiederum in einem entsprechenden Textfeld 518 dargestellt.

Zudem ist ein viertes Übertragungsnetz 600 mit den Teilnehmern 601 - 606 und dem Textfeld 618 mit dem Namen "Gesamtgraph 4" dargestellt.

Mit Hilfe des Mauszeigers 200 wurde das erste Übertragungsnetz 300 ausgewählt und in der Tabelle 160 in den Namensfeldern 162 und 166 die zwei dem "Gesamtgraph 1" 300 zugeordneten Kommunikationssysteme "Teilgraph 1" und "Teilgraph 2" dargestellt. Die Tabelle 160 ist wiederum graphisch über die Verbindungslinie 180 mit der graphischen Darstellung 300 von Gesamtgraph 1 verbunden, wodurch für einen Betrachter der Anzeige 10 klar dargestellt wird, zu welchem der angezeigten Übertragungsnetze die in der Tabelle 160 angezeigten Kommunikationssysteme gehören.

Im Folgenden werden anhand der Figuren nochmals einige Aspekte der vorliegenden Erfindung beispielhaft erwähnt. Dabei wird für das Übertragungsnetz der Begriff "Gesamtgraph" sowie die Kommunikationssysteme der Begriff "Teilgraph" beziehungsweise "Teilgraphen" verwendet.

In Figur 1 ist beispielsweise dargestellt, dass der Ausgangspunkt zum Anzeigen eines Teilgraphen der Gesamtsgraph selbst sein kann. Dazu kann der Anwender beispielsweise einen Mauszeiger über einen beliebigen Punkt des Gesamtgraphen bewegen und ihn eine bestimmte Zeit darüber halten oder auch anwählen.

Ein Vorteil hierbei ist beispielsweise, dass der Ausgangspunkt zum Anzeigen des Teilgraphen der Gesamtgraph selbst ist. Es ist nicht mehr notwendig, einen Teilnehmer zum Anzeigen seines ihm zugeordneten Teilgraphen oder seiner ihm zugeordneten Teilgraphen zu ermitteln. Die zugeordneten Teilgraphen werden beispielsweise durch Halten des Mauszeigers auf einen beliebigen Punkt des zugrunde liegenden Gesamtgraphen, oder auch das Anklicken des zugrunde liegenden Gesamtgraphen, mit dem Mauszeiger angezeigt.

In Figur 2 ist beispielhaft dargestellt, wie die gezeigte Auswahlliste zur Auswahl anzuzeigender Teilgraphen verwendet werden kann. Diese Liste wird automatisch angezeigt, sobald der Mauszeiger über den Gesamtgraphen oder bereits dargestellte Teilgraphen positioniert ist beziehungsweise diese mit dem Mauszeiger angewählt werden. Die Tabelle enthält eine Spalte "Namen vorhandener Teilgraphen" mit Zellen, die jeweils den Namen der Teilgraphen enthalten, und eine vordere Spalte "Fixierungs-Steuerelemente" zur Assoziation, ob der Teilgraph dauerhaft angezeigt werden soll (Stecknadel-Darstellung) oder nur temporär.

Es ist ein Vorteil, dass die Darstellung der zugeordneten Teilgraphen zur Auswahl der anzuzeigenden Teilgraphen verwendet wird. Durch die graphische Zusammenfassung der Teilgraphen in der Tabelle ist ein deutlich schnellerer Wechsel des anzuzeigenden Teilgraphen gegenüber den bisher bekannten Verfahren möglich.

Weiterhin wird die Tabellendarstellung zum zugehörigen Gesamtgraph durch eine Linie visuell assoziiert. Im Gegensatz zu beispielsweise sogenannten "Tooltipps" wird dem Anwender ein visueller Bezug zwischen der angezeigten Tabelle und seinem zugrunde liegenden Kontext in Form einer Linie dargestellt. Dies kommt dem Anwender insbesondere bei komplexen Graphensystemen zugute.

Figur 3 zeigt ein Beispiel dafür, wie ein anzuzeigender Teilgraph durch Mausklick auf eine Zelle der dargestellten Tabelle ausgewählt wird beziehungsweise auswählbar ist. Durch diese Auswahl wird der Teilgraph des Gesamtgraphen angezeigt. Die Zuordnung des angezeigten Teilgraphen zum gewählten Tabelleneintrag wird durch das nun angezeigte Fixierungs-Steuerelement (Symbol: Pin/Reißnadel/Stecknadel) in der vorderen Spalte "Fixierungs-Steuerelemente" dargestellt und optional zusätzlich durch die Änderung der Hintergrundfarbe in der Zelle "Teilgraph 1".

In Figur 4 ist ein Beispiel für den Wechsel eines anzuzeigenden Teilgraphen gezeigt. Der Anwender kann dabei den aktuell anzuzeigenden Teilgraphen jederzeit wechseln, indem er im Anzeigesteuerelement eine andere Tabellenzeile anklickt. Dabei wird die Anzeige des bisher hervorgehobenen Graphen beendet und der zur Zeile gehörende Teilgraph wird angezeigt.

Ein Beispiel für das Beenden der Darstellung der zugeordneten Teilgraphen ist in Figur 5 gezeigt. Dabei wird die Tabellendarstellung beendet, wenn der Mauszeiger das die Tabelle umfassende Rechteck verlässt, oder der Mauszeiger am die Tabelle umfassenden Rechteck vorbeigeführt wird. Vorteilhaft dabei ist, dass das die Tabelle beispielsweise ohne zusätzliche Mausklicks beendbar ist und der Anwender sofort mit den Elementen der graphischen Oberfläche interagieren kann.

Figur 6 zeigt ein Beispiel für eine Interaktion mit dem angezeigten und fixierten Teilgraphen. Der angezeigte und fixierte Teilgraph ist dabei jetzt selektierbar und Aktionen wie Kopieren, Löschen und Anzeigen seiner Eigenschaften sind möglich. Getrennt davon ist der Gesamtgraph immer noch selektier- und damit ebenfalls hantierbar. Vorteilhaft dabei ist, dass das im Oberflächenmodell als Teilgraph definierte Objekt unabhängig vom Objekt, das als Gesamtgraph modelliert wird, graphisch hantiert werden kann.

In Figur 7 ist ein Beispiel für eine dynamische Erweiterung der Tabelle zur Anzeige der Teilgraphen um einen Teilgraphen dargestellt. Sobald der Anwender den Gesamtgraphen um weitere Teilgraphen erweitert, werden diese in der Tabelle des Anzeige-Steuerelements aufgelistet. Der neue Teilgraph kann beispielsweise durch neue Elemente (wie zum Beispiel Kanten und/oder Knoten) des Gesamtgraphen entstehen, aber auch zum Beispiel dadurch, dass auf dem bestehenden Gesamtgraphen neue Teilgraphen definiert werden. Ein Vorteil davon ist, dass, wenn neue Teilgraphen im Gesamtgraphen entstehen, oder wenn beispielsweise Teilgraphen entfernt werden, die zur Aktivierung der Anzeige notwendigen Steuerelemente innerhalb der Liste der zugeordneten Teilgraphen automatisch, das heißt, ohne Anwendereinwirkung hinzugefügt beziehungsweise entfernt werden.

Beispiele für ein nicht fixiertes Anzeigen eines Teilgraphen lassen sich zum Beispiel Figur 8 entnehmen. So kann beispielsweise in einer ersten Alternative durch einen Mausklick auf eine Zelle der Spalte "Namen vorhandener Teilgraphen" der zugehörige Teilgraph solange angezeigt werden, solange die Maustaste gedrückt ist ("Mausbutton down"). Der Anzeigestatus wird dem Anwender durch eine Änderung der Hintergrundfarbe der Zelle visualisiert. Sobald der Anwender die Maustaste wieder loslässt ("Mausbutton up"), wird die Anzeige des Teilgraphen beendet.

In einer weiteren Alternativ kann beispielsweise durch das Klicken (erst "Mausbutton down" und dann "Mausbutton up") mit der Maus auf eine Zelle mit dem Namen eines Teilgraphen der zugehörige Teilgraph solange angezeigt werden, bis die Anzeige der Tabelle mit den Teilgraphen wieder beendet wird.

Die visuelle Fixierung der Teilgraphen in der Benutzeroberfläche erfolgt ausschließlich durch das Klicken mit der Maus auf eine Zelle der vorderen Spalte mit den "Fixierungs-Steuerelementen".

Durch die genannten Alternativen kann sich der Anwender zum Beispiel einen schnellen Überblick über die Teilgraphen verschaffen, wenn er beispielsweise nicht die Absicht hat, mit diesen zu interagieren.

Figur 9 zeigt ein Beispiel für ein gleichzeitiges Anzeigen mehrerer Teilgraphen durch Multiselektion von Tabellenzeilen in der Tabelle der Teilgraphen. Dabei kann der Anwender durch die Selektion mehrerer Tabellenzeilen erreichen, dass gleichzeitig mehrere Teilgraphen des Gesamtgraphen hervorgehoben werden. Additiv kann in der Tabellendarstellung der Teilgraphen ein weiteres Steuerelement integriert werden, mit welchem der Anwender durch einen Mausklick alle bestehenden Teilgraphen anzeigen kann (Funktion: Show all). Diese beispielhaften Ausgestaltungen haben z.B. den Vorteil, dass es dem Anwender möglich wird, sich mehrere Teilgraphen gleichzeitig anzeigen zu lassen, um zum Beispiel diese gemeinsam zu löschen oder sie visuell miteinander zu vergleichen.

## Patentansprüche

1. Verfahren zur Auswahl eines einem Übertragungsnetz (100, 300, 400, 500, 600) eines Automatisierungs-Systems zugeordneten Kommunikationssystems (120, 130, 140), wobei
a) ein Übertragungsnetz (100, 300, 400, 500, 600) mit mehreren an das Übertragungsnetz (100, 300, 400, 500, 600) angeschlossenen Teilnehmern (101 - 115) eines oder mehrerer Automatisierungs-Systeme auf einer Anzeigeeinheit (10) dargestellt oder darstellbar ist,
b) dem Übertragungsnetz (100, 300, 400, 500, 600) mindestens zwei Kommunikationssysteme (120, 130, 140) zugeordnet sind, wobei die mindestens zwei Kommunikationssysteme (120, 130, 140) jeweils zur Kommunikation zwischen mindestens zwei der an das Übertragungsnetz (100, 300, 400, 500, 600) angeschlossenen Teilnehmer (101 - 115) über das Übertragungsnetz (100, 300, 400, 500, 600) ausgebildet und eingerichtet sind,
c) durch Auswahl eines dem Übertragungsnetz auf der Anzeigeeinheit zugeordneten Auswahlbereichs (100, 300, 400, 500, 600) mittels eines Auswahlmittels (200) die dem Übertragungsnetz (100, 300, 400, 500, 600) zugeordneten Kommunikationssysteme (120, 130, 140) dargestellt werden, insbesondere auf der Anzeigeeinheit (10) dargestellt werden,
d) und nach Verfahrensschritt c) eines der dargestellten Kommunikationssysteme (120, 130, 140) auswählbar ist, insbesondere mittels des Auswahlmittels (200) auswählbar ist.

2. Verfahren zur Auswahl eines einem Übertragungsnetz (100, 300, 400, 500, 600) eines Automatisierungssystems zugeordneten Kommunikationssystems (120, 130, 140), wobei
a) ein Übertragungsnetz (100, 300, 400, 500, 600) mit mehreren an das Übertragungsnetz angeschlossenen Teilnehmern (101 - 115) eines oder mehrerer Automatisierungs-Systeme auf einer Anzeigeeinheit (10) dargestellt oder darstellbar ist,
b) dem Übertragungsnetz (100, 300, 400, 500, 600) mindestens zwei Kommunikationssysteme (120, 130, 140) zugeordnet sind, wobei die mindestens zwei Kommunikationssysteme (120, 130, 140) jeweils zur Kommunikation zwischen mindestens zwei der an das Übertragungsnetz angeschlossenen Teilnehmer (101 - 115) über das Übertragungsnetz ausgebildet und eingerichtet sind,
c) durch Auswahl eines einem Teil des Übertragungsnetzes (100, 300, 400, 500, 600) auf der Anzeigeeinheit zugeordneten Auswahlbereichs (100, 300, 400, 500, 600) mittels eines Auswahlmittels (200) die dem Teil des Übertragungsnetzes (100, 300, 400, 500, 600) zugeordneten Kommunikationssysteme (120, 130, 140) dargestellt werden, insbesondere auf der Anzeigeeinheit (10) dargestellt werden,
d) und nach Verfahrensschritt c) eines der dargestellten Kommunikationssysteme (120, 130, 140) auswählbar ist, insbesondere mittels der Auswahlmittel (200) auswählbar ist.

3. Verfahren nach Anspruch 1 oder 2,
**dadurch gekennzeichnet,**
**dass** nach Verfahrensschritt d) das ausgewählte Kommunikationssystem (120, 130, 140) graphisch auf der Anzeigeeinheit (10) dargestellt und/oder hervorgehoben wird.

4. Verfahren nach einem der Ansprüche 1 bis 3,
**dadurch gekennzeichnet,**
**dass** nach Verfahrensschritt d) oder e) dem ausgewählten
Kommunikationssystem (120, 130, 140) eine Aktion zuweisbar ist oder zugewiesen wird.

5. Verfahren nach Anspruch 4,
**dadurch gekennzeichnet,**
**dass** als Aktion zuweisbar ist:
- ein Verschieben mindestens eines Teilnehmers des ausgewählten Kommunikationssystems (120, 130, 140), und/oder
- ein Kopieren, Einfügen oder Löschen mindestens eines Eigenschaftswerts mindestens eines Teilnehmers (101 - 115) des ausgewählten Kommunikationssystems (120, 130, 140), und/oder
- ein Zuweisen mindestens eines Eigenschaftswerts zu mindestens einem Teilnehmer (101 - 115) des ausgewählten Kommunikationssystems (120, 130, 140).

6. Verfahren nach einem der Ansprüche 1 bis 5,
**dadurch gekennzeichnet,**
**dass** bei einem gemäß einem der vorstehenden Ansprüche ausgewählten Kommunikationssystem (120, 130, 140) parallel auch dem Übertragungsnetz (100, 300, 400, 500, 600) eine
Aktion zuweisbar ist oder zugewiesen wird, insbesondere eine Aktion gemäß Anspruch 4 zuweisbar ist oder zugewiesen wird.

7. Bedieneinheit für ein Automatisierungssystem, umfassend
a) eine Anzeigeeinheit (10) zur Darstellung eines Übertragungsnetzes (100, 300, 400, 500, 600) mit mehreren an das Übertragungsnetz (100, 300, 400, 500, 600) angeschlossenen Teilnehmern (101 - 115) des Automatisierungs-Systems, wobei dem Übertragungsnetz (100, 300, 400, 500, 600) mindestens zwei Kommunikationssysteme (120, 130, 140) zugeordnet sind und die mindestens zwei Kommunikationssysteme (120, 130, 140) jeweils zur Kommunikation zwischen mindestens zwei der an das Übertragungsnetz (100, 300, 400, 500, 600) angeschlossenen Teilnehmer (101 - 115) über das Übertragungsnetz (100, 300, 400, 500, 600) ausgebildet und eingerichtet sind,
b) Bedien-Mittel oder eine Bedien-Steuereinheit zur Steuerung eines auf der Anzeigeeinheit (10) angezeigten Auswahlmittels (200),
c) eine Steuereinrichtung, die derart eingerichtet und ausgebildet ist, dass über eine Steuerung des Auswahlmittels (200) durch die Bedien-Mittel durch Auswahl eines dem Übertragungsnetz (100, 300, 400, 500, 600) auf der Anzeigeeinheit (10) zugeordneten Auswahlbereichs (100, 300, 400, 500, 600) alle dem Übertragungsnetz zugeordneten Kommunikationssysteme (120, 130, 140) dargestellt werden, und dann eines der dargestellten Kommunikationssysteme (120, 130, 140) unter Verwendung der Bedien-Mittel auswählbar ist, insbesondere mittels des Auswahlmittels (200) auswählbar ist.

8. Bedieneinheit nach Anspruch 7,
**dadurch gekennzeichnet,**
**dass** die Steuereinrichtung zur Durchführung eines Verfahrens gemäß einem der Ansprüche 1 bis 6 ausgebildet ist.
